# EUROPÄISCHE PATENTANMELDUNG

(11) **EP 2 884 317 A1**
(43) Veröffentlichungstag der Anmeldung: **17.06.2015**
(21) Anmeldenummer: 13005835.7
(22) Anmeldetag: 16.12.2013
(51) Int. Cl.: G02B 6/00, G09F 9/302

(54) **Verfahren und Vorrichtung zur Verringerung des Moiré Effektes bei TV-Aufnahmen von LED-Bildwänden**

(71) Anmelder: ICT AG, 72664 Kohlberg (DE)
(72) Erfinder: Dolde, Manfred, D-72587 Römerstein (DE)
(74) Vertreter: Jungblut & Seuss

(57) **Zusammenfassung**

Die vorliegende Patentanmeldung betrifft ein Verfahren und eine Vorrichtung zur Verringerung des Moiré-Effektes bei TV-Aufnahmen von Bildwänden. Nach der erfindungsgemäßen Lehre wird die Lichtabstrahlung der LEDs durch entsprechende Lichtkanäle in Beobachtungsrichtung gebündelt, von den Nebenpixeln separiert gehalten und durch auf die Lichtkanalöffnung aufgebrachte Diffusorelemente gestreut. Die Lichtkanäle können unterschiedlich ausgestaltet sein, z.B. zylinderförmig oder kegelfömig, insbesondere trapezförmig oder parabelförmig. Zur Erreichung einer besseren Vermischung der RGB Pixel und Diffusierung kann das Diffusorelement auch den Lichtkanal ausfüllen und an der der LED zugewandten Seite mit einer zusätzlichen Diffusorfläche versehen werden.

Neben der Anwendung zur Verringerung des Moiré Effektes ist mit abgewandelten Einzelkomponenten (Lichtkanal/Diffusor) auch eine Lichtbündelung für besondere Anforderungen wie Erhöhung der Leuchtstärke in Axialrichtung oder der Anbringung von Diffusorschichten in großem Abstand möglich.

## Beschreibung

Die vorliegende Patentanmeldung betrifft ein Verfahren und eine Vorrichtung zur Verringerung des Moiré-Effektes bei TV-Aufnahmen von Bildwänden. Nach der erfindungsgemäßen Lehre wird die Lichtabstrahlung der LEDs durch entsprechende Lichtkanäle in Beobachtungsrichtung gebündelt, von den Nebenpixeln separiert gehalten und durch auf die Lichtkanalöffnung aufgebrachte Diffusorelemente gestreut. Die Lichtkanäle können unterschiedlich ausgestaltet sein, z.B. zylinderförmig oder kegelfömig, insbesondere trapezförmig oder parabelförmig. Zur Erreichung einer besseren Vermischung der RGB Pixel und Diffusierung kann das Diffusorelement auch den Lichtkanal ausfüllen und an der der LED zugewandten Seite mit einer zusätzlichen Diffusorfläche versehen werden.

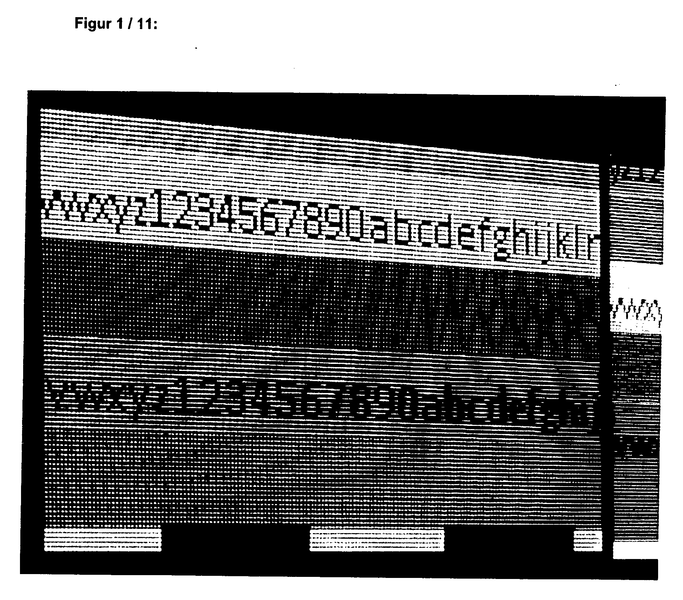

Großflächige LED-Bildwände werden heutzutage bei vielen öffentlichen Veranstaltungen eingesetzt, z. B. bei Sportveranstaltungen, Konzertveranstaltungen sowie bei anderen Gelegenheiten. Bei der Fernsehübertragung derartiger Veranstaltungen und beim Photographieren kommt es allerdings regelmäßig zu sogenannten Moire-Effekten bei der Aufnahme solcher LED Bildflächen. Es handelt sich hierbei um einen Sonderfall der Interferenz, der durch die Abtastung des Bildes in der TV-Kamera entsteht und sich durch verschiedenste Linien und Ringstrukturen auf den gefilmten LED-Wänden bemerkbar macht (Figur 1). Dieser störende Effekt wird sowohl in Schwarzweiß- als auch Farbflächen ersichtlich. Die Ursache dieses Effektes dürfte in der punktförmigen digitalen Abtastung der Aufnahmechips der Kameras liegen, die sich mit den LED-Bildpunkten überlagert.

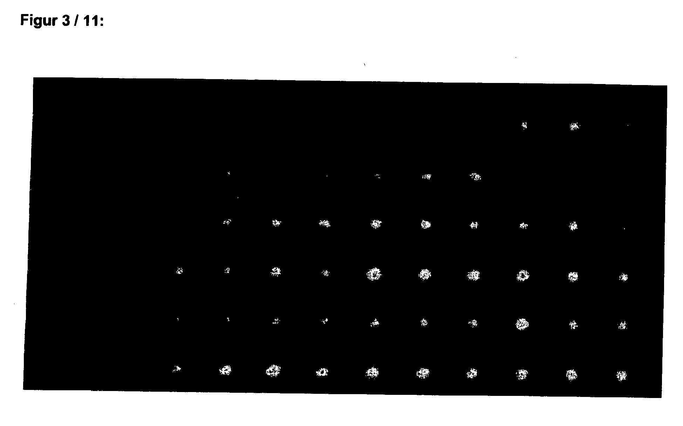

Eine bislang realisierte Lösung zur Vermeidung des Moiré-Effektes ist, einen Diffusor (z.B. in Form einer Diffusorfolie, vor die LED-Platine zu setzen, der die LED-Bildpunkte verfließen lassen soll. Derartige Diffusorflächen haben aber den Nachteil, dass es schwer ist, die Abstände zu den LEDs konstant zu halten, was dann zu unterschiedlich großen und hellen Bildpunkten führt (siehe Figur 3). Auch Luftströmungen nehmen durch Bewegungen dieser Diffusorflächen negativen Einfluss auf das Bild, insbesondere wenn es sich um dünne Diffusorfolien handelt. Darüber hinaus reflektieren die Diffusorfolien einen Teil des von der LED-Fläche kommenden Lichts nach hinten zurück, was sich dort mit dem Licht der anderen LEDs vermischt und das Bild insgesamt aufhellt. Im Ergebnis führt diese Lösung zu einem geringen Kontrastumfang des Bildes. Darüber hinaus kommt es beim Einsatz dicker Folien oder Kunststoff-, oder Glasvorsatzflächen, darüber hinaus speziell bei seitlichem Einblickwinkel zu sichtbaren Schattenbildern durch Abbildungen an der Rückseite und Vorderseite dieser Diffusorflächen, aber auch Spiegelungen innerhalb derselben. Ebenfalls durch die direkte Sichtbarkeit des hinter der Diffusorfläche liegenden kleineren LED-Punktes und des auf der frontseitig liegende Diffusorflächen abgebildeten und bei diesem seitlichen Einblick geometrisch versetzten größeren Bildpunktes.

Gegenstand der vorliegenden Erfindung ist ein Verfahren und eine Vorrichtung zur Verringerung bis zur Vermeidung dieses Moiré-Effektes bei der Aufnahme derartiger LED-Bildwände. Gemäß der erfindungsgemäßen Lösung wird das LED-Licht jedes einzelnen Bildpunktes, d. h. jeder einzelnen LED in Beobachtungsrichtung durch geeignete Lichtkanäle und/oder auch Linsen gebündelt und durch einen davor befindlichen Diffusor wieder gestreut.

Ein Gegenstand der vorliegenden Erfindung ist daher ein Verfahren zur Verringerung des Moiré-Effektes bei Aufnahmen von LED-Bildwänden, dadurch gekennzeichnet, dass jede LED mit einem Lichtkanal und/oder auch Linse versehen wird, der das emittierte Licht der jeweiligen LED bündelt und dass jeder Lichtkanal unmittelbar auf und/oder in der Lichtkanalöffnung mit einem Diffusor versehen wird, der das emittierte Licht einer einzelnen LED streut.

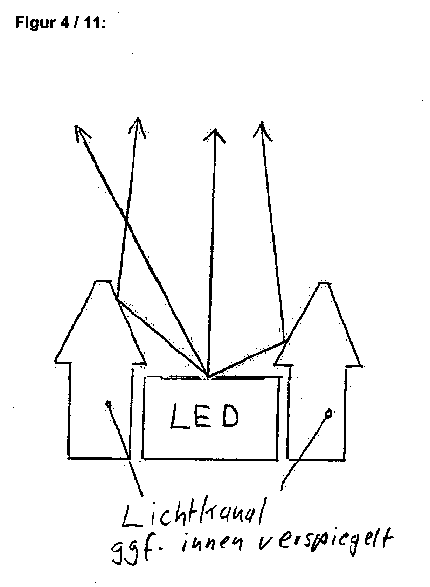

Gemäß der erfindungsgemäßen Lösung wird das Licht jeder einzelnen, als Bildpunkt dienenden, LED durch einen Lichtkanal gebündelt. Der grundsätzliche Aufbau eines solchen Lichtkanals wird in der Figur 4 dargestellt. Es handelt sich hierbei um eine Lichtkanalvorrichtung mit einem trapezförmigen Querschnitt. Ein derartiger Lichtkanal wird einfach mit seiner kleineren Öffnung auf die Abstrahlfläche der LED aufgesetzt und bündelt das von der LED, in der Regel im 160 Grad Winkelbereich austretende Licht somit in Beobachtungsrichtung. Das Licht tritt somit durch die größere Öffnung des kegelförmigen Lichtkanals in gebündelter Form wieder aus.

LED-Bildwände bestehen aus sehr vielen Bildpunkten. Derartige Wände haben oft mehrere, bis zu hunderte Quadratmeter Größe (z. B. 3 x 3 m, 3 x 4 m, 5 x 8 m...). Die einzelnen LEDs auf diesen Bildwänden sind in der Regel in Zeilen und Spalten geordnet. Solche Wände können z.B. 1920 LED Pixel Spalten und 1080 LED Pixel Reihen bei einer Fläche von ca. 75 m² und 6 mm Pixelabstand oder auch 960 LED Pixel Spalten und 640 LED Pixel Reihen bei einer Fläche von ca. 61 m² und 10 mm Pixelabstand haben. Durch die erfindungsgemäß eingesetzten Lichtkanäle entsteht eine klare Trennung zwischen den einzelnen Bildpunkten. Unabhängig vom Blickwinkel wird der jeweilige Bildpunkt immer nur an der Oberfläche des Diffusors abgebildet und es entstehen weder Reflektionen noch Schattenbilder.

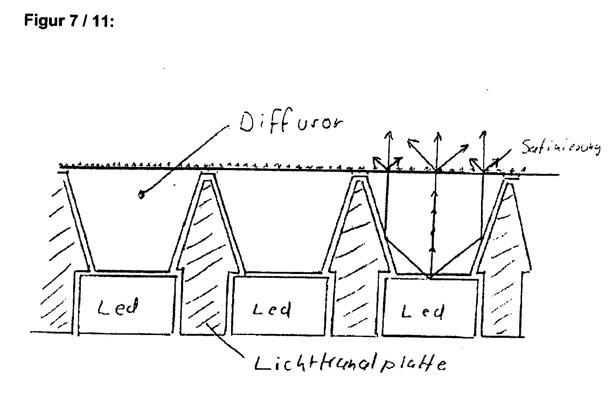

Unmittelbar vor die jeweilige Lichtkanalöffnung wird zusätzlich ein dünner Diffusor angebracht, der nur das Licht des jeweiligen LED-Bildpunktes streut. Auf diese Weise wird vermieden, dass sich das Licht eines LED-Bildpunktes mit den danebenliegenden Bildpunkten vermischt. Optional, kann der Diffusor auch mit einer der Lichtkanalform entsprechenden Formgebung in die Lichtkanalöffnung eingebettet werden (siehe Figur 7). Dieses eingebettete Profil verringert den Luftspalt zwischen Diffusor und LED und sorgt somit als weiterer Vorteil für eine bessere Temperatur-Abführung. Als Diffusor eignen sich insbesondere Kunststoffe, z.B. auf Plexiglas oder Polycarbonatbasis, die zumindest an der Oberfläche eine Satinierung oder Streupartikel als Diffusor eingebettet haben.

Durch den Einbau des Diffusors wird das durch die einzelne LED abgestrahlte und durch die Lichtkanalform im Abstrahlwinkel gebündelte Licht großflächig gestreut und der Abstrahlwinkel an der Diffusor Vorderseite gespreizt, um aus einem großen Winkelbereich eine gute und helle Sichtbarkeit zu erreichen. Auf die beschriebene Weise entsteht eine klare Trennung zwischen den Bildpunkten mit trotzdem großem Abstrahl- und Einblickwinkel. Unabhängig vom Blickwinkel wird nur der jeweilige Bildpunkt an der Oberfläche des Diffusors sichtbar. Gleichzeitig werden Reflektionen oder Schattenbilder in Nebenpixelflächen vermieden.

Zur einfacheren Montage der Lichtkanäle an den LEDs werden diese erfindungsgemäß durch "Lichtkanalplatten" ausgeführt. Hierbei handelt es sich um Platten, die eine Vielzahl von Lichtkanalelementen für eine Vielzahl von LEDs aufweisen. Im einfachsten Fall wird eine Metallplatte mit einer typischen Stärke von 2-4 mm mit einer Reihe von Durchlässen versehen, deren Öffnungen so ausgestaltet sind, dass sie einen Lichtkanal für die dahinterliegenden LEDs bilden. Die einzelnen Lichtkanäle in den Lichtkanalplatten weisen die gewünschte Formgebung auf, z.B. zylinderförmig, kegelförmig, trapezförmig, parabelförmig. Üblicherweise weisen alle Lichtkanäle in einer Lichtkanalplatte dieselbe Form auf, für spezielle Anwedungen sind aber auch unterschiedliche Formgebungen der Lichtkanäle auf einer Lichtkanalplatte denkbar. Es versteht sich von selbst, dass der Abstand der jeweiligen Öffnungen der Lichtkanalplatte den Abständen auf der LED-Platine entsprechen muss. Vorteilhafterweise ist die Oberfläche der Lichtkanäle hochglänzend ausgestaltet um auch soviel wie möglich des LED Lichtes zum Publikum zu reflektieren. Abhängig von den Applikationsanforderungen kann diese Lichtkanalfläche aber auch in dunklerer, bis schwarzer Farbe und auch in Kunststoff oder alternativem Material ausgeführt werden. Bei der Ausführung in dunkler Farbe erhält man bessere Schwarzwerte und somit auch höhere Kontraste bei der Bildwiedergabe, speziell auch bei auf die LED Wand strahlendem Licht.

Generell erreicht man mit dieser Erfindung gegenüber vorgesetzten Diffusorplatten bessere Kontraste. Zum einen ergeben sich diese durch die optisch-mechanische Trennung der einzelnen LED Pixel mit den Lichtkanalplatten. Stellt man z.B. eine schwarze Linie in der einen Pixelreihe dar und in der nebenliegenden Pixelreihe eine weiße Linie, so würden diese in einer normalen Diffusorfläche ineinander verfließen. Durch die Abgrenzung mit der Lichtkanalplatte und dünner Diffusoroberfläche werden beide Linien getrennt gehalten und als deutlich sichtbare schwarze und weiße Linie abgebildet.

Der andere Vorteil dieser Erfindung ist, dass sich durch den Diffussor einfallendes Licht in jeder einzelnen Lichtkanalzelle durch Mehrfachreflektion auf den Lichtkanalflächen zumindest in Teilen "totläuft", mit größerem Effekt bei Verwendung schwarzer Lichtkanalplatten. Es versteht sich von selbst, dass der Lochabstand der Lichtkanalplatte dem Montageabstand der einzelnen LEDs entsprechen muss. Derartige Lichtkanalplatten können beliebig groß ausgestaltet sein, um an LED-Projektionswänden Verwendung zu finden. Selbstverständlich ist es möglich, eine große LED-Wand durch eine Mehrzahl von Lichtkanalplattenmodulen abzudecken.

Die erfindungsgemäße Vorrichtung zur Vermeidung des Moiré-Effektes enthält daher die Komponenten Lichtkanal und Diffusor, sowie entsprechende Montageadapter zur exakten Positionierung und Befestigung auf LED-Modulen. Diese sind modular gestaltbar, sowie für individuelle LED-Wandformen und -krümmungen verwendbar. Befestigungsadapter können aber auch bereits in den Lichtkanal und Diffusorelementen, die in der Regel im Spritzgussverfahren hergestellt werden, eingebaut werden.

### Alternative Ausführungsformen unter Verwendung der beschriebenen Komponenten

Für verschiedene Anwendungen können die Reflektionswinkel der Lichtkanäle durch dessen Formgebung beeinflusst werden. Beispielsweise kann der Lichtkanal eine Parabolform aufweisen, welche einen höheren Lichtgewinn bei der frontalen Betrachtung erlaubt, während die Helligkeit bei seitlicher Betrachtung vermindert wird. Die Tiefe des Lichtkanals (bzw. Stärke der Lichtkanalplatte) kann in dieser Ausführungsform bis zu 2 cm betragen. Die Diffusorfläche würde in dem Fall so ausgeführt, dass diese eine nur geringe Breitenstreuung hat, ggf. sogar ganz auf den Diffusor verzichtet wird. Wird eine derartig ausgestaltete LED-Wand von vorne betrachtet (Beobachtungswinkel 90 Grad zur LED-Oberfläche mit z.B. +/-20 Grad) so wird durch die parabolische Ausformung der Lichtkanäle eine deutlich hellere LED-Wand gebildet. Alternativ könnte eine derartige Wand mit geringer Leuchtkraft betrieben werden, was zur Energieeinsparung bzw. Erhöhung der Lebensdauer und Langzeitstabilität führt.

In einer alternativen Ausführungsform kann eine LED-Bildwand so ausgebildet sein, dass sie Lichtkanalplatten mit parabolischer Lichtkanalform aufweist, die so dimensioniert sind, dass der Lichtaustritt sehr schmal gebündelt ist. In einigen Zentimetern Abstand von der LED Wand (typischerweise 1-10cm, bevorzugt 3-6 cm) und somit auch vor dieser Lichtkanaloberfläche kann eine Bildfläche angeordnet sein, die als Diffusor dient. Als Material hierfür kann jegliches Material verwendet werden, welches eine gewisse Transparenz hat und das Licht an dieser Stelle bricht (diffusiert). Eine derartige Bauform kann beispielsweise dergestalt realisiert sein, dass eine dicke Plexiglasplatte als Trägerschicht verwendet wird, die frontseitig mit einem Diffusor-Material laminiert, lackiert oder bestrichen wurde, oder auch frontseitig geschliffen wurde, um von hinten illuminiert zu werden (beispielsweise mit einem Film bespielt zu werden). Auf diese Weise lassen sich interessante optische Effekte erzielen. Durch die Bündelung des LED Lichtes auf einen schmalen Lichtabstrahlwinkel weitet sich der Bildpunkt im transparenten Teil der vorgebauten Bildfläche nur minimal auf, sodass sich auf der Diffusorschicht nur geringe bis keine Überdeckungen der dort abgebildeten LED Bildpunkte ergeben. Im Ergebnis führt dies dazu, dass generell eine vorgesetzte dicke, oder weiter entfernte Schicht (z.B. entsprechend konstruierte Wandfassade) mit Bildern einer LED Wand durchstrahlt werden kann.

Das Grundprinzip der Erfindung soll an den anhängenden Figuren weiter verdeutlicht werden, ohne dass diese selbst einschränkend wirken sollen.

### Figuren

Figur 1 zeigt eine Abbildung einer LED-Bildwand mit einem durch die Aufnahme entstandenen Moiré-Effekt (Linien- und Ringstrukturen in den Farbflächen, welche im Original gleichmäßig leuchten)).

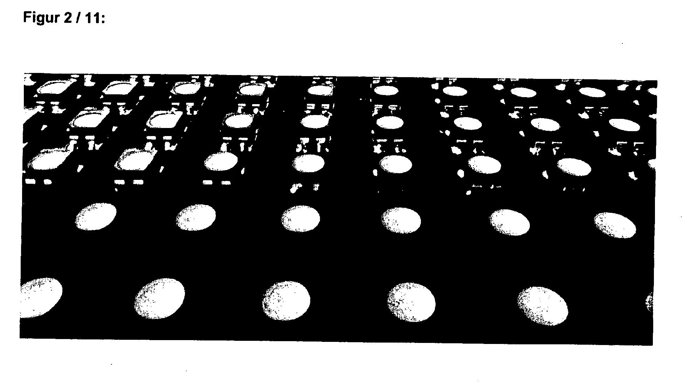

Figur 2 zeigt eine LED-Platine. Diese enthält im unteren Bereich sogenannte Shader, die aus dem Stand der Technik bekannt sind. Im oberen Bereich sind die einzelnen LEDs zu sehen inklusive ihrer Anschlüsse.
Figur 3 zeigt LED-Bildpunkte hinter einer Diffusorfläche gemäß dem Stand der Technik, wobei die Diffusorfläche einen leicht unterschiedlichen Abstand zur LED-Fläche aufweist und auf diese Weise unterschiedlich scharf abgebildete LED-Bildpunkte erzeugt.
Figur 4 zeigt das Funktionsprinzip der vorliegenden Erfindung: Das aus dem "LED-Window" austretende Licht wird über den Lichtkanal (Mirror) mit dessen reflektierender Oberfläche ("Reflecting Surface") nach vorne (in Beobachtungsrichtung) gerichtet. Der Strahlengang ist aus dem Bild idealisiert dargestellt. Der Lichtkanal ist im Querschnitt trapezförmig ausgestaltet.
Figur 5 zeigt beispielhaft eine "Lichtkanalplatte" für eine LED-Platine mit 14 x 14 LEDs. Es handelt sich dabei um eine Metallfläche mit Kegel-Bohrungen, wobei die Bohrlöcher die Lichtkanaloberfläche bilden. In diesem Beispiel ist der jeweilige Lichtkanal im Querschnitt trapezförmig ausgebildet.

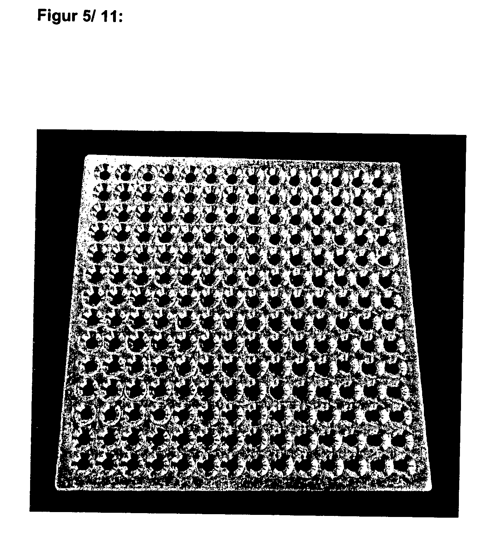

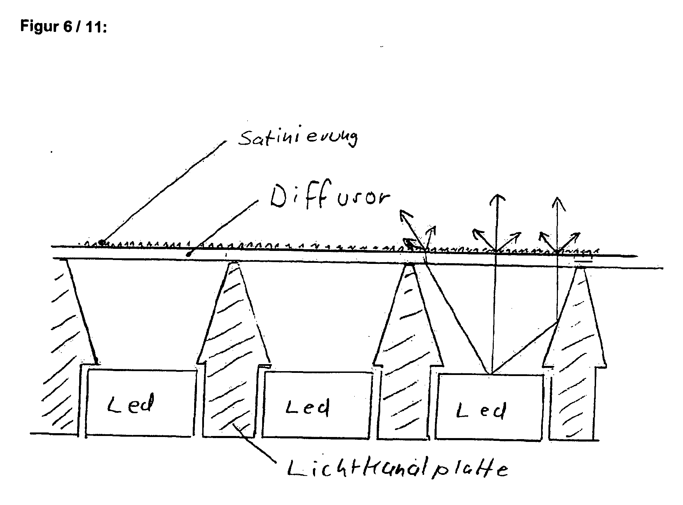

Figur 6 zeigt den Aufbau der erfindungsgemäßen Vorrichtung wobei auf die Lichtkanalplatte gemäß Figur 5 ein Diffusor ausgebracht wird. Dies kann beispielsweise durch eine einzige großflächige Folie oder Platte realisiert werden, die auf die Lichtkanalplatte gemäß Figur 5 aufgesetzt wird. Der Diffusor streut das Licht jeder LED großflächig und spreizt den Abstrahlwinkel, um aus einem großen Einblickwinkelbereich eine gute und helle Sichtbarkeit zur erhalten. Dabei wird durch die erfindungsgemäße Konstruktion kein Licht benachbarter Bildpunkte mitgestreut, ebenso wenig kommt es zu Reflektionen aus benachbarten Bildpunkten.
Figur 7 zeigt eine Alternative zu Figur 6, nämlich einen Diffusor, der den Hohlraum des Lichtkanals ausfüllt und direkt auf der LED-Oberfläche aufliegt und damit ein direkter Kontakt zwischen der LED-Oberfläche und der hohlraumausfüllenden Diffusorplatte hergestellt wird.
Das Licht wird direkt in den Körper der Diffusorplatte eingekoppelt und auch primär darin reflektiert. Zusätzlich wird dabei durch das "Thermal Bonding" eine bessere Wärmeableitung der LED erreicht.

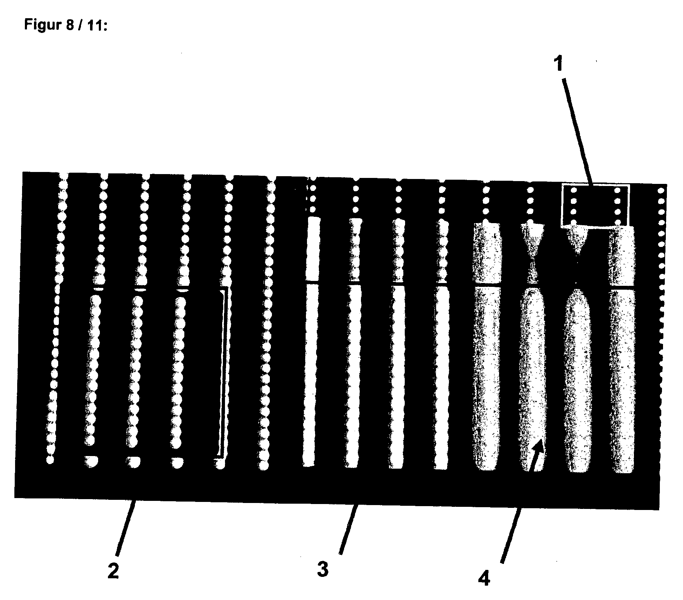

Figur 8 zeigt im Vergleich das erhaltene Ergebnis der erfindungsgemäßen Vorrichtung mit unterschiedlichen Diffusoren. Es handelt sich hierbei um die Abbildung einer LED-Fläche, die weiße, vertikale Linien zeigt, die einen Abstand von 4 Pixeln zueinander haben:
   In dem mit 1 bezeichneten Feld sind die LEDs ohne Vorsätze sichtbar. Die LED-Punkte sind sichtbar als digitales Raster ausgebildet, die Interferenzen erzeugen würden.
   In dem mit 2 gekennzeichneten Feld wird eine erfindungsgemäße Vorrichtung dargestellt. Die LED Dots verfließen nahezu zu einer Linie. Hierbei werden Interferenzen vermieden, gleichzeitig jedoch die einzelnen Pixel voneinander unterscheidbar gehalten, was eine sehr gute Schärfeabbildung erlaubt. Das Schwarzfeld wird weiterhin als schwarz wiedergegeben.
   In dem mit 3 gekennzeichneten Feld wird anstelle der erfindungsgemäßen Vorrichtung lediglich ein leicht diffusierender Vorsatz gewählt. Die LED-Dots verfließen nahezu zu einer Linie, ähnlich wie bei der erfindungsgemäßen Vorrichtung. Die Schwarzfelder werden allerdings durch Reflektionen zwischen Diffusor und LED-Platine deutlich aufgehellt. Auf diese Weise wird schwarz nur noch als grau dargestellt. Weiterhin reflektieren die hellen LED-Fenster als helle Dots. Bei schrägem Einblick werden auch noch Spiegelungen der LED-Dots sichtbar.
   In dem mit 4 gekennzeichneten Feld erkennt man einen Diffusorvorsatz mit stärkerem Diffusionsgrad. Das Bild wird im Ergebnis noch milchiger, die schwarzen Felder werden in noch hellerem Grau dargestellt. Im Ergebnis ist deutlich zu erkennen, dass die erfindungsgemäße Vorrichtung (gemäß Feld 2) die beste Abbildungsleistung ermöglicht.

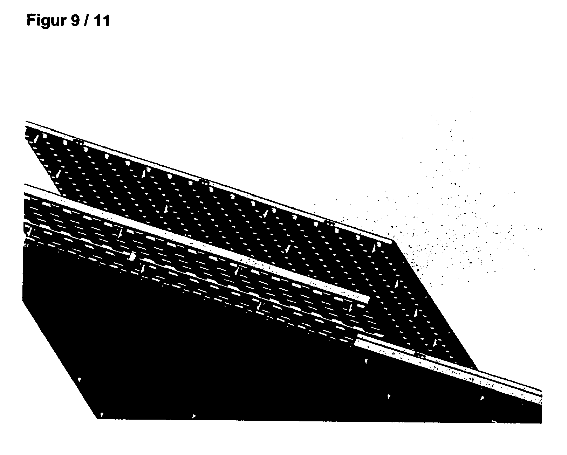

Figur 9 zeigt eine seitliche Ansicht der erfindungsgemäßen Vorrichtung nach der Montage auf einem LED-Modul.

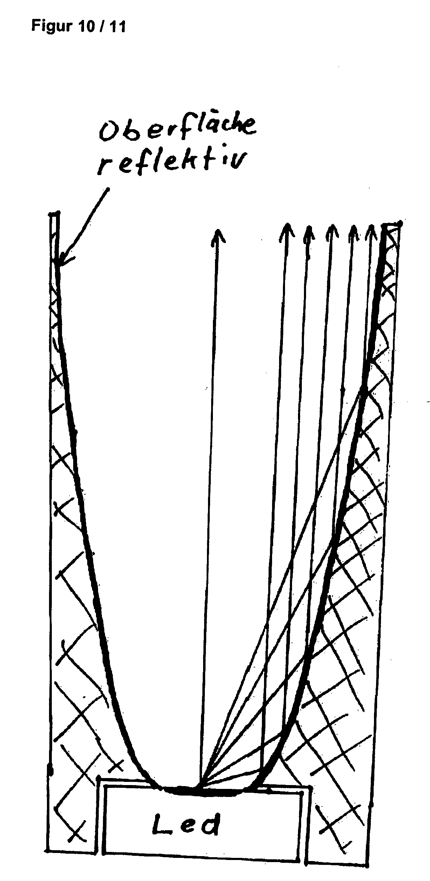

Figur 10 zeigt eine erfindungsgemäße Vorrichtung, bei parabolischer Lichtkanalausformung. Die gezeichnete Lichtkanalform ist so ausgelegt, dass möglichst viel des von der LED abgestrahlten Lichts "parallelisiert" in einem möglichst engen Öffnungswinkel nach vorne abgestrahlt wird.

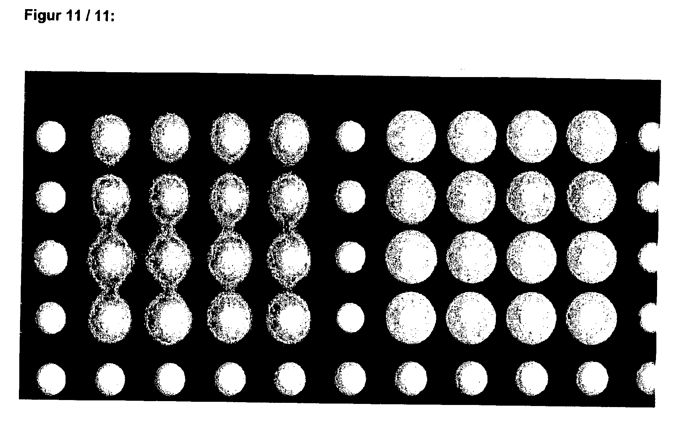

Figur 11 zeigt den Vergleich eines trapezförmigen Lichtkanalquerschnitts mit einem parabolischen Lichtkanalquerschnitt. Links im Bild sind LED-Punkte mit trapezförmigem Lichtkanalvorsatz, rechts im Bild Bildpunkte mit parabolischem Lichtkanalvorsatz. In der Regel ist der parabolische Lichtkanal tiefer (bis zu 2 cm) als der trapezförmige, welcher typischerweise 2-4 mm tief ist. Die LED-Bildpunkte mit parabolischem Lichtkanalvorsatz sind deutlich heller und schärfer erkennbar. Allerdings nimmt die Helligkeit der Bildpunkte stark ab, wenn eine vom 90 Grad Winkel unterschiedliche Beobachtungsposition gewählt wird, während die LED-Bildpunkte mit trapezförmiger Lichtkanalausgestaltung auch eine sehr gute Sichtbarkeit bei einem weiten Blickwinkelbereich (z.B. 30° - 150°) erlauben.

## Patentansprüche

1. Verfahren zur Verringerung des Moiré-Effektes bei TV-Aufnahmen von LED-Bildwänden, **dadurch gekennzeichnet, dass** jede LED mit einem Lichtkanal versehen wird, der das emittierte Licht der jeweiligen LED bündelt und dass jeder Lichtkanal unmittelbar auf oder in der Lichtkanalöffnung mit einem Diffusor versehen wird, der das emittierte Licht einer einzelnen LED streut.

2. Verfahren zur Verringerung des Moiré-Effektes bei TV-Aufnahmen von LED-Bildwänden gemäß Anspruch 1, **dadurch gekennzeichnet, dass** das Profil des Lichtkanals zylinderförmig ist.

3. Verfahren zur Verringerung des Moiré-Effektes bei TV-Aufnahmen von LED-Bildwänden gemäß Anspruch 1, **dadurch gekennzeichnet, dass** das Profil des Lichtkanals kegelförmig ist.

4. Verfahren zur Verringerung des Moiré-Effektes bei TV-Aufnahmen von LED-Bildwänden gemäß Anspruch 3, **dadurch gekennzeichnet, dass** das Profil des kegelförmigen Lichtkanals einen trapezförmigen oder parabolischen Querschnitt aufweist.

5. Verfahren zur Verringerung des Moiré-Effektes bei TV-Aufnahmen von LED-Bildwänden gemäß mindestens einem der Ansprüche 1 bis 4, **dadurch gekennzeichnet, dass** die der LED zugewandte Oberfläche des Lichtkanals verspiegelt ist.

6. Verfahren zur Verringerung des Moiré-Effektes bei TV-Aufnahmen von LED-Bildwänden gemäß Anspruch 1, **dadurch gekennzeichnet, dass** eine Vielzahl von Lichtkanälen gemäß mindestens einem der Ansprüche 1 bis 5 zu einer Lichtkanalplatte zusammengefasst wird.

7. Verfahren zur Verringerung des Moiré-Effektes bei TV-Aufnahmen von LED-Bildwänden gemäß Anspruch 1, **dadurch gekennzeichnet, dass** unmittelbar auf der Lichtkanalöffnung ein Diffusor angebracht ist.

8. Verfahren zur Verringerung des Moiré-Effektes bei TV-Aufnahmen von LED-Bildwänden gemäß Anspruch 1, **dadurch gekennzeichnet, dass** unmittelbar auf eine Lichtkanalplatte gemäß Anspruch 6 eine Diffusorfläche aufgetragen wird.

9. Lichtkanalplatte zur Verwendung in einem Verfahren gemäß Anspruch 1, **gekennzeichnet durch** eine Vielzahl von Ausnehmungen zur Aufnahme einzelner LEDs mit einem zylinderförmigen, trapezförmigen oder parabolischem Querschnitt und einer Diffusorfläche auf der Oberfläche.

10. Verwendung einer Lichtkanalplatte gemäß Anspruch 9, zur Erzielung höherer Helligkeiten bei einem Betrachtungswinkel senkrecht zur LED Fläche.

11. Verwendung einer Lichtkanalplatte gemäß Anspruch 9, zur Bündelung des Abstrahlwinkels von LED Modulen, so dass LED Punkte auch auf einer Diffusorfläche mit einem Abstand von 1-10 cm, bevorzugt 3-6 cm, noch deutlich voneinander abgegrenzt abgebildet werden.
